# EUROPEAN PATENT SPECIFICATION

(11) **EP 3 363 996 B1**
(45) Date of publication and mention of the grant of the patent: **29.04.2020**
(21) Application number: 17156570.8
(22) Date of filing: 16.02.2017
(51) Int. Cl.: F01D 17/08

(54) **BLADE ASSEMBLY AND CORRESPONDING GAS TURBINE ENGINE**
SCHAUFELANORDNUNG UND ENTSPRECHENDES GASTURBINENKRAFTWERK
AGENCEMENT D'AUBE ET MOTEUR À TURBINE À GAZ CORRESPONDANT

(43) Date of publication of application: 22.08.2018
(73) Proprietor: Ansaldo Energia Switzerland AG, 5401 Baden (CH)
(72) Inventor: BALAKIREV, Alexander, 127015 Moskow (RU); KHANIN, Alexander, 121601 Moscow (RU); GORELOVA, Anastasiya, 141021 Mytischi, Moscow Reg. (RU)
(74) Representative: Bellemo, Matteo

(56) References cited:
- FR-A1- 3 025 884
- FR-A1- 3 038 981
- US-A1- 2015 198 094
- US-B1- 6 595 062

## Description

### TECHNICAL FIELD

The present invention relates to a blade assembly for gas turbine engines and to a gas turbine engine incorporating said blade assembly.

More specifically, the present invention preferably relates to a blade assembly for a gas turbine engine with sequential combustion. Gas turbine engine to which the following description will make explicit reference purely by way of example and without implying any loss of generality.

### BACKGROUND OF THE INVENTION

As is known, a gas turbine engine generally comprises a roughly-tubular, oblong outer casing and, inside said outer casing: a multi-stage compressor in which compression of the outside air occurs for producing a flow of compressed air; a combustor assembly which is located downstream of the compressor and in which combustion of a mixture of the compressed air arriving from the multi-stage compressor and fuel occurs for producing a flow of hot gasses; and a multi-stage expansion turbine which is located downstream of combustor assembly and in which expansion of the hot gasses arriving from the combustor assembly occurs before said hot gasses leave the gas turbine engine.

The combustor assembly, in turn, generally comprises a number of oblong sequential combustor devices which are angularly staggered around the engine shaft of the gas turbine engine, immediately downstream of the compressor.

Today's gas turbine engines are additionally provided with sensor devices capable of continuously measuring the temperature of the hot gasses immediately downstream of the combustor assembly.

Since the temperature of the hot gasses can reach up to 2000 °C immediately downstream of the combustor assembly and thermocouples generally do not have a sufficient lifetime in such a hot environment, in today's gas turbine engines pyrometer devices are used for measuring the temperature of the hot gasses immediately downstream of the combustor assembly.

US6109783 discloses a pyrometer device incorporated into one of the stationary blades, i.e. one of the vanes, of the first or second stage of the multi-stage expansion turbine of a gas turbine engine.

Unfortunately, fitting of the pyrometer device inside the vane of the expansion turbine is extremely complicated because the hollow seats formed into the vane body for accommodating the measuring probe and other component parts of the pyrometer device offer a very limited space for thermal expansion in all necessary directions. As a consequence any positioning error can lead to a significant increase of the thermal and/or mechanical stresses which the measuring probe is subjected to, with all problems that this entails.

FR3025884 A1 discloses a blade assembly for gas turbine engines including a turbine blade and a sensor device at least partly housed inside the turbine blade.

### DISCLOSURE OF THE INVENTION

Aim of the present invention is to simplify the assembly of the pyrometer device into the blade body of the expansion turbine thus to minimize positioning errors.

In compliance with these aims, according to the present invention there is provided a blade assembly for gas turbine engines as defined in Claim 1 and preferably, though not necessarily, in any one of the dependent claims.

Moreover according to the present invention there is also provided a gas turbine engine as defined in Claim 15.

### BRIEF DESCRIPTION OF THE DRAWINGS

The present invention will now be described with reference to the accompanying drawings, which show a non-limitative embodiment thereof, in which:
- Figure 1 is a simplified side view, with parts in section and parts removed for clarity, of a gas turbine engine incorporating a blade assembly realized according to the teachings of the present invention;
- Figure 2 is an enlarged view of a portion of the gas turbine engine in Figure 1, showing the blade assembly realized according to the teachings of the present invention;
- Figure 3 is a perspective view of the blade assembly realized according to the teachings of the present invention, with parts in section and parts removed for clarity;
- Figure 4 is a sectioned side view of the blade assembly shown in Figure 3;
- Figure 5 is an enlarged view of the leading-edge portion of the blade assembly shown in Figure 4;
- Figure 6 is a perspective view of the root-portion of the blade assembly shown in Figures 3 and 4, with parts removed for clarity;
- Figure 7 is an enlarged top view of the root-portion of the blade assembly shown in Figure 6, with parts in section and parts removed for clarity;
- Figure 8 is a perspective view of the tip-portion of the blade assembly shown in Figures 3 and 4, with parts removed for clarity; whereas
- Figure 9 is an enlarged section view of the tip-portion of the blade assembly shown in Figure 4, with parts removed for clarity.

### DETAILED DESCRIPTION OF THE INVENTION

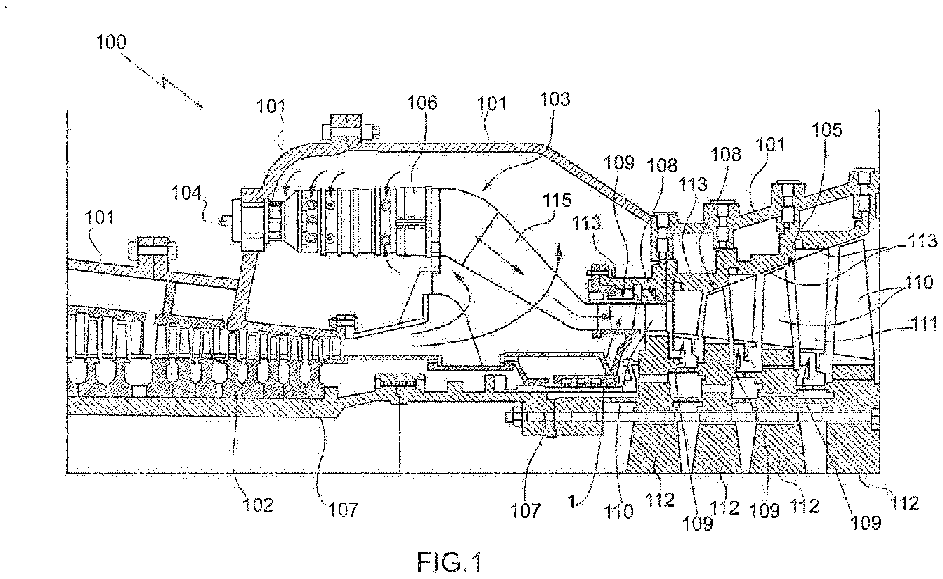

With reference to Figures 1, 2 and 3, referral number 1 denotes as a whole a blade assembly including: a turbine blade 2 preferably adapted to be incorporated into the expansion turbine of a gas turbine engine; and a pyrometer device 3 which is at least partially accommodated inside the turbine blade 2 and is able to detect the temperature of the hot gasses in the nearby of the turbine blade 2.

Blade assembly 1 is therefore suitable to be incorporated into a gas turbine engine 100 preferably particularly adapted to drive into rotation a traditional electric generator (not shown).

In more detail, with reference to Figure 1, the gas turbine engine 100 preferably basically comprises a roughly tubular, main outer casing 101 and, inside said outer casing 101: a preferably multi-stage, compressor 102 in which compression of the outside air occurs for producing a flow of compressed air; a combustor assembly 103 which is located downstream of the compressor 102 and in which combustion of a mixture of compressed air arriving from compressor 102 and fuel arriving from a fuel supply line 104 occurs for producing a flow of hot gasses; and finally a preferably multi-stage, expansion turbine 105 which is located downstream of the combustor assembly 103 and in which expansion of the hot gasses arriving from combustor assembly 103 occurs before said hot gasses leave the gas turbine engine 100.

The combustor assembly 103 in turn preferably comprises a number of discrete oblong combustor devices 106 which are preferably substantially evenly angularly staggered around the engine shaft 107 of gas turbine engine 100, and are preferably accommodated inside an annular chamber formed inside the outer casing 101, between compressor 102 and expansion turbine 105. In each combustor device 106, the fuel arriving from the fuel supply line 104 is continuously mixed to the compressed air arriving from compressor 102, so as to form an inflammable mixture that quickly burns up inside the combustor device 106 to produce a flow of hot gasses.

Preferably each combustor device 106 moreover performs a sequential combustion and therefore includes two distinct combustors arranged one downstream the other.

Thus the gas turbine engine 100 is preferably a gas turbine engine with sequential combustion.

Structure of compressor 102 and of combustor assembly 103 are widely known per se, thus no further explanations are required.

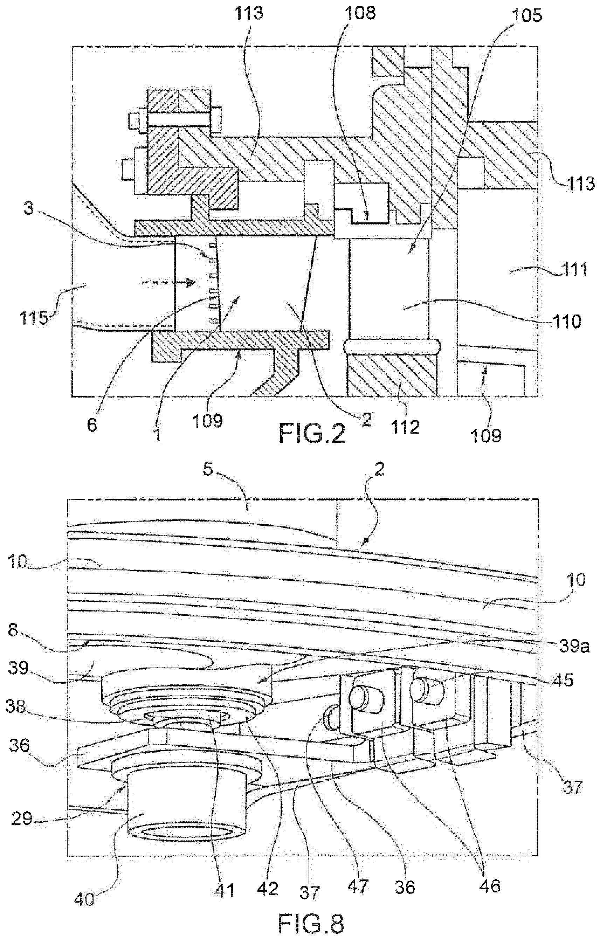

With reference to Figures 1 and 2, the expansion turbine 105, in turn, comprises a series of annular rows of turbine blades arranged one adjacent the other, coaxial to one another and to the engine shaft 107. This series of annular rows of turbine blades moreover includes one or more annular rows of rotating blades 108, and one or more annular rows of stationary blades 109 intercalated to the annular rows of rotating blades 108 along the engine shaft 107 of the gas turbine engine 100.

Each annular row of rotating blades 108 includes a given number of substantially radially-extending, first turbine blades 110 which are substantially evenly angularly staggered around the engine shaft 107, and are rigidly connected to the engine shaft 107 so as to rotate together with the same engine shaft 107.

Each annular row of stationary blades 109, on the other hand, includes a given number of substantially radially-extending, second turbine blades 111, also called vanes, which are substantially evenly angularly staggered around the engine shaft 107, and are rigidly connected to the outer casing 101 of the gas turbine engine 100 so as to remain motionless while engine shaft 107 rotates.

Each annular row of rotating blades 108 and the adjacent annular row of stationary blades 109 form a respective expansion stage of the expansion turbine 105.

With reference to Figure 1, in the example shown, in particular, the turbine blades 110 of each annular row of rotating blades 108 are preferably rigidly connected to a corresponding central hub or disk 112 which, in turn, is rigidly coupled to the engine shaft 107, so that each turbine blade 110 protrudes outwards from the central hub 113 in roughly radial direction.

The turbine blades 111 of each annular row of stationary blades 109, on the other hand, are preferably rigidly connected to a corresponding annular supporting structure 113 which is rigidly connected to the outer casing 101 of the gas turbine engine 100, substantially coaxial to the engine shaft 107, so that each turbine blade 111 protrudes inwards from the annular supporting structure 113 in roughly radial direction.

With reference to Figures 1, 2 and 3, in addition to the above at least one of said annular rows of stationary blades 109 preferably additionally includes at least one and preferably a number of blade assemblies 1 that are preferably evenly angularly staggered around the engine shaft 107.

In other words this annular row of stationary blades 109 includes a number of traditional turbine blades 111 and additionally also one or more blade assemblies 1.

In more detail, the annular row of stationary blades 109 preferably forming the first or second expansion stage of the expansion turbine 105 additionally includes one or more blade assemblies 1 preferably evenly angularly staggered around the engine shaft 107.

More specifically, in the example shown the annular row of stationary blades 109 preferably located immediately downstream of combustor assembly 103, i.e. the annular row of stationary blades 109 preferably located immediately adjacent to the outlet mouths of the transition ducts 115 of the various combustor devices 106, preferably includes a number of traditional turbine blades 111 and additionally also one or more blade assemblies 1.

In other words, the annular row of stationary blades 109 forming the first expansion stage of the expansion turbine 105 preferably includes a number of traditional turbine blades 111 and additionally also a number of blade assemblies 1.

The structure of turbine blades 110 and 111 are widely known per se, thus no further explanations are required.

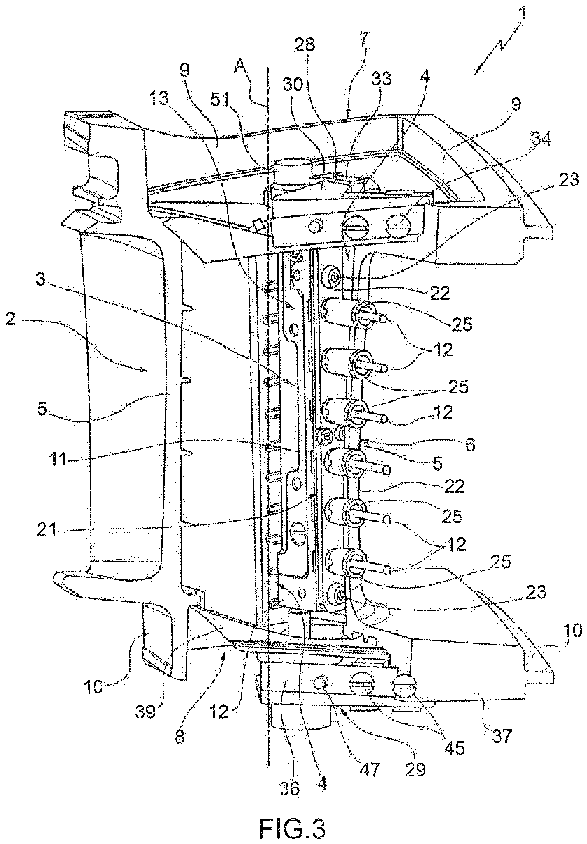

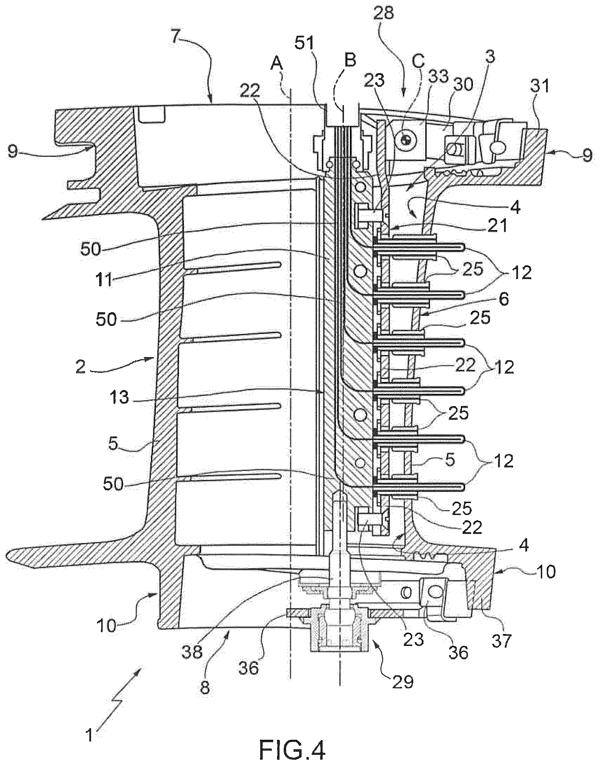

As regards instead the blade assembly 1, with reference to Figures 3 and 4, the turbine blade 2 has a longitudinal inner cavity 4 that extends inside the same turbine blade 2 nearly parallel to a longitudinal axis A of the blade, for the whole length of the turbine blade 2.

More specifically the turbine blade 2 preferably has an airfoil-shaped oblong main section 5 and, on opposite sides of said main section 5, a coupling root 7 and a distal tip 8. The longitudinal inner cavity 4 extends inside the turbine blade 2 immediately behind and roughly parallel to the leading edge 6 of the airfoil-shaped main section 5, from the coupling root 7 up to the distal tip 8.

The coupling root 7 is specifically designed/adapted to rigidly couple with the annular supporting structure 113, and preferably includes a first plate-like end portion 9, traditionally called outer-diameter platform, which preferably extends substantially perpendicular to the longitudinal axis A of blade 2, i.e. extends in roughly tangential direction.

The distal tip 8 is specifically designed/adapted to skim over the engine shaft 107, or more specifically over the central hubs or disks 112 of the immediately adjacent two annular rows of rotating blades 108, and preferably includes a plate-like second end portion 10, traditionally called inner-diameter platform, which preferably extends substantially perpendicular to the longitudinal axis A of the blade, i.e. extends in roughly tangential direction.

With reference to Figures 3 and 4, the pyrometer device 3 in turn comprises: a preferably substantially straight, oblong supporting body 11 which is made of metal material and extends inside the longitudinal inner cavity 4, preferably spaced beside and preferably roughly parallel to the leading edge 6 of the blade; and a given number (six in the example shown) of transversal oblong ceramic caps 12 that jut out from a same sidewall of the oblong supporting body 11 spaced side by side to one another, and furthermore extend in cantilever manner and transversally to the oblong supporting body 11 towards the adjacent leading edge 6 of the turbine blade 2, preferably while remaining roughly parallel to one another and preferably while remaining substantially perpendicular to the longitudinal axis B of the same oblong supporting body 11, so as to form, together with the oblong supporting body 11, a rake structure 13.

More specifically the oblong ceramic caps 12 preferably extend substantially coplanar to one another and to the oblong supporting body 11. Moreover the oblong ceramic caps 12 are preferably substantially evenly spaced side-by-side to one another.

Each oblong ceramic cap 12 is preferably substantially nail-shaped and engages in pass-through manner a corresponding through hole or opening 14 formed in the lateral wall of the main section 5 of turbine blade 2, approximately at the leading edge 6 thereof, so that a segment of the oblong ceramic cap 12 protrudes outside of the turbine blade 2 in cantilever manner.

In addition to the above, each oblong ceramic cap 12 is preferably discrete from the oblong supporting body 11 and has its proximal end 12a in abutment on the sidewall of the oblong supporting body 11. The rake structure 13, in turn, preferably additionally includes fixing means adapted to stably hold the oblong ceramic cap 12 against the oblong supporting body 11.

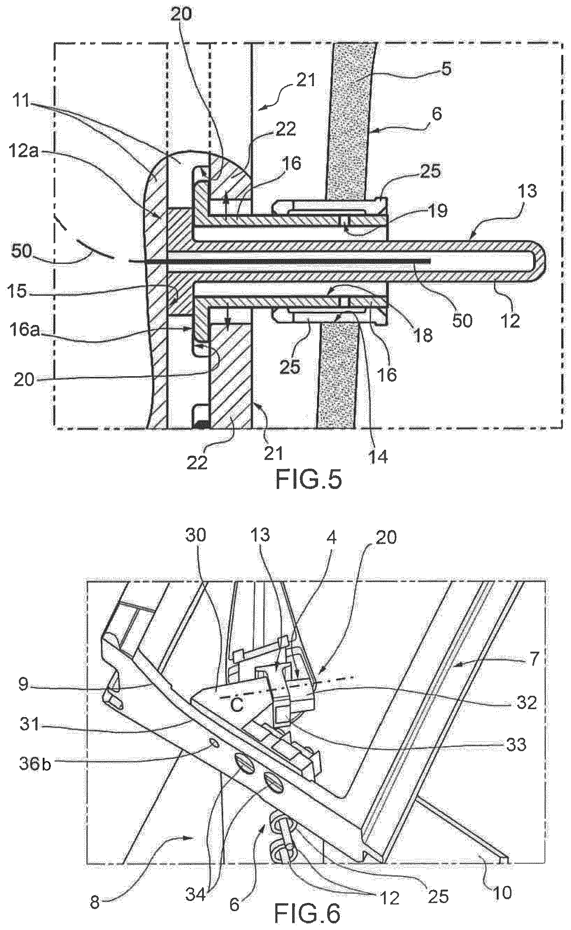

In more detail, with particular reference to Figure 5, each oblong ceramic cap 12 preferably has a discoidal or flanged proximal end 12a which rests in simple abutment against the sidewall of the oblong supporting body 11, preferably within a corresponding and preferably roughly complementary-shaped, hollow seat or recess 15 formed in the oblong supporting body 11.

Preferably the rake structure 13 moreover comprises, for each oblong ceramic cap 12, a respective oblong tubular sleeve 16 which is preferably roughly cylindrical in shape, is preferably made of metal material, and is preferably discrete from the oblong supporting body 11. The oblong tubular sleeve 16 extends roughly coaxial to the oblong ceramic cap 12, from the sidewall of supporting body 11 up to the leading edge 6 of turbine blade 2, or better up to the through hole or opening 14 on main section 5, so as to enclose/surround the segment of ceramic cap 12 housed/ recessed inside the turbine blade 2.

With particular reference to Figure 5, preferably each oblong tubular sleeve 16 is moreover dimensioned so as to form/delimit an annular airgap 18 all-around the oblong ceramic cap 12.

More specifically, the inner diameter of each tubular sleeve 16 is preferably at least 30% greater that the outer diameter of the oblong ceramic cap 12 so as to form/delimit an approximately cylindrical, annular airgap 18 all-around the oblong ceramic cap 12.

Preferably at least one and preferably a number of transversal through holes 19 are additionally formed in the lateral wall of the oblong tubular sleeve 16, preferably evenly angularly staggered about the longitudinal axis of the same tubular sleeve 16, so as to allow free air circulation along the annular airgap 18.

More specifically, the one or more through holes 19 preferably allow part of the cooling air that flows along the longitudinal inner cavity 4 of turbine blade 2 to freely enter/penetrate into the annular airgap 18 and then flow inside the tubular sleeve 16 towards to the outside of turbine blade 2 while locally cooling the oblong ceramic cap 12.

Furthermore each oblong tubular sleeve 16 preferably has its proximal end 16a arranged in simple abutment against the sidewall of the oblong supporting body 11, and the rake structure 13 preferably additionally includes fixing means adapted to stably hold the oblong tubular sleeve 16 against the oblong supporting body 11.

More specifically, the proximal end 16a of each tubular sleeve 16 preferably abuts in free sliding manner onto the sidewall of the oblong supporting body 11, so that the whole tubular sleeve 16 is able to freely slide over the oblong supporting body 11 in any direction preferably locally substantially perpendicular to the longitudinal axis of the same tubular sleeve 16, i.e. in a turbine radial or circumferential direction.

Preferably the oblong ceramic cap 12 located inside the tubular sleeve 16 instead remains stationary with respect to the oblong supporting body 11.

The fixing means of the rake structure 13, in turn, are preferably adapted to stably hold the/each tubular sleeve 16 in abutment against the oblong supporting body 11 while allowing, at same time, the tubular sleeve 16 to freely slide over the surface of the oblong supporting body 11 in a direction preferably locally substantially perpendicular to the longitudinal axis of the tubular sleeve 16, i.e. in a turbine radial or circumferential direction.

With reference to Figures 3, 4 and 5, preferably the diameter of the through hole or openings 14 formed on the main section 5 are moreover significantly greater than the outer diameter of the tubular sleeves 16 so as to ease insertion of the whole rake structure 13 into the turbine blade 2.

In other words, the through holes 14 are dimensioned to allow easy manual insertion of the oblong tubular sleeves 16 already secured to the oblong supporting body 11 into the leading edge 6 of the turbine blade 2.

With particular reference to Figure 5, in the example shown, in particular, likewise the oblong ceramic caps 12, each oblong tubular sleeve 16 preferably has a discoidal or flanged proximal end 16a which is arranged in abutment against the sidewall of the oblong supporting body 11, preferably within a corresponding hollow seat or recess 20 formed in the supporting body 11 roughly coaxial to the hollow seat or recess 15.

Preferably the diameter of said hollow seat or recess 20 is moreover significantly greater than that of the discoidal or flanged proximal end 16a of the tubular sleeve 16, so as to allow the same tubular sleeve 16 to freely move with respect to the oblong supporting body 11 and to the inner-located oblong ceramic cap 12 in a direction locally substantially perpendicular to the longitudinal axis of the tubular sleeve 16, i.e. in a turbine radial or circumferential direction.

In addition to the above, in the example shown the discoidal or flanged proximal end 16a of the/each tubular sleeve 16 preferably directly abuts in sliding manner onto the discoidal or flanged proximal end 12a of the corresponding oblong ceramic cap 12 and preferably also onto the sidewall of supporting body 11.

The discoidal or flanged proximal end 12a of the oblong ceramic cap 12, in turn, preferably directly abuts onto the oblong supporting body 11, underneath the discoidal or flanged proximal end 16a of the tubular sleeve 16.

With reference to Figures 3, 4 and 5, preferably the rake structure 13 in turn includes a retaining assembly 21 adapted to firmly press and stably hold, at same time, the discoidal or flanged proximal ends 16a of the tubular sleeves 16 and the discoidal or flanged proximal ends 12a of the ceramic caps 12 in stable abutment against the sidewall of the oblong supporting body 11.

More specifically, in the example shown the retaining assembly 21 preferably comprises: an oblong covering plate 22 which is preferably made of metal material and extends over the sidewall of the oblong supporting body 11 having the hollow seats or recesses 15 and 20, and also over the discoidal or flanged proximal ends 12a, 16a of the tubular sleeves 16 and the ceramic caps 12; and preferably a number of transversal anchoring screws 23 which engage in sequence the covering plate 22 and the oblong supporting body 11 to hold the covering plate 22 in stable abutment on the oblong supporting body 11.

With reference to Figures 3, 4 and 5, preferably the pyrometer device 3 additionally comprises, for each oblong tubular sleeve 16, a tubular bushing 25 which is preferably made of metal material and is firmly plugged/fitted into the through hole or opening 14 formed in the main section 5 of turbine blade 2, whereas the distal portion of the oblong tubular sleeve 16 extends within the tubular bushing 25.

Preferably the distal end of the tubular sleeve 16 is furthermore telescopically fitted into the tubular bushing 25 thus to be able to freely move/slide axially into the tubular bushing 25.

With reference to Figures 3, 4, 6, 7, 8 and 9, blade assembly 1 preferably additionally includes a first 28 and a second 29 coupling members adapted to firmly connect the two axial ends of the rake structure 13, or better the two axial ends of the oblong supporting body 11, respectively to the coupling root 7 and to the distal tip 8 of turbine blade 2.

More specifically, coupling member 28 is preferably adapted to firmly connect a first axial end of the rake structure 13 to the adjacent plate-like end portion 9 of coupling root 7. Coupling member 29 instead is preferably adapted to firmly connect a second axial end of the rake structure 13 to the adjacent plate-like end portion 10 of distal tip 8.

Furthermore, coupling member 28 is preferably adapted to firmly connect the rake structure 13 to the coupling root 7 of turbine blade 2 while allowing the rake structure 13 to pivot with respect to the plate-like end portion 9 of coupling root 7 about a given reference axis C which is preferably locally perpendicular to the laying plane P of the rake structure 13, i.e. of the laying plane of both the oblong supporting body 11 and the oblong ceramic caps 12, and/or is preferably substantially perpendicular to the longitudinal axis A of the turbine blade 2.

Coupling member 29 instead is preferably adapted to firmly connect the rake structure 13 to the distal tip 8 of turbine blade 2 while allowing the rake structure 13 to freely move in turbine radial direction, i.e. roughly parallel to the longitudinal axis A of turbine blade 2.

In other words, coupling member 29 preferably firmly connects the rake structure 13 to the distal tip 8 of turbine blade 2 so as to prevent any movements of the rake structure 13 both in turbine axial and circumferential direction, and to allow free movements of rake structure 13 in turbine radial direction, i.e. roughly parallel to the longitudinal axis A of the blade, for compensating different thermal elongations of rake structure 13 and airfoil-shaped main section 5 of turbine blade 2.

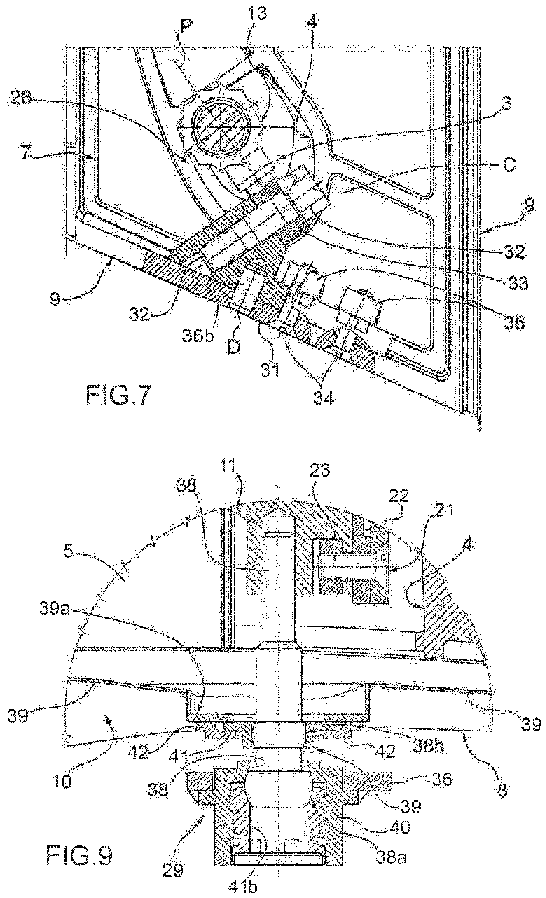

With reference to Figures 6 and 7, in the example shown, in particular, the coupling member 28 preferably comprises: a supporting bracket 30 which is preferably made of metal material and extends, preferably cantilevered, from a peripheral wall 31 of the plate-like end portion 9 of coupling root 7 towards the central opening or mouth of the longitudinal inner cavity 4 of turbine blade 2, preferably while remaining roughly parallel to plate-like end portion 9 of coupling root 7; and a single transversal fixing screw 32 which is preferably made of metal material, and extend coaxial to the reference axis C while engaging in sequence both the axial end of the rake structure 13 and the supporting bracket 30. During assembly of the rake structure 13, the fixing screw 32 operates as pivoting member so as to allow the rake structure 13 to freely pivot with respect to the supporting bracket 30, about reference axis C.

In more detail, the supporting bracket 30 is preferably platelike and preferably has a first flat sidewall firmly secured in abutment on the perimeter wall 31 of the plate-like end portion 9, and a second flat sidewall in abutment on a coupling lug 33 that protruding from the axial end of rake structure 13 locally substantially coplanar to the oblong ceramic caps 12.

The fixing screw 32 is preferably locally perpendicular to the second sidewall of supporting bracket 30 and preferably engages in axially rotatable manner the coupling lug 33 of the rake structure 13 before screwing into the supporting bracket 30.

The first sidewall of supporting bracket 30, in turn, is preferably firmly secured to the peripheral wall 31 of the plate-like end portion 9 of coupling root 7 via two or more anchoring bolts 34, each of which engages in pass-through manner both the peripheral wall 31 and the supporting bracket 30 before reaching and screwing into a corresponding locking nut 35 located opposite to the peripheral wall 31 of plate-like end portion 9.

Preferably the first sidewall of supporting bracket 30 is additionally secured to the perimeter wall 31 of plate-like end portion 9 via a centering pin 36b that protrudes in cantilever manner from the perimeter wall 31 and extends within the supporting bracket 30 while remaining coaxial to a longitudinal reference axis D which is preferably locally substantially perpendicular to the perimeter wall 31 and preferably also substantially coplanar and inclined to the longitudinal axis C of fixing screw 33.

With reference to Figures 3, 4, 8 and 9, the coupling member 29 in turn preferably comprises: a supporting bracket 36 which is preferably made of metal material and extends, preferably cantilevered, from a peripheral wall 37 of the plate-like end portion 10 of distal tip 8 towards the central opening or mouth of the longitudinal inner cavity 4 of turbine blade 2, preferably while remaining roughly parallel to the plate-like end portion 10 of distal tip 8; and a fixing pin 38 which is preferably made of metal material, extends substantially parallel to the longitudinal axis B of supporting body 11 while engaging in pass-through and preferably also axially-sliding manner the supporting bracket 36 and the platelike lid 39 that closes the adjacent opening or mouth of longitudinal inner cavity 4, and finally screws into the axial end of the oblong supporting body 11.

Furthermore a sealing system is preferably interposed between the fixing pin 38 and the platelike lid 39 of turbine blade 2 so as to prevent the cooling air from freely flowing outside of the longitudinal inner cavity 4 of turbine blade 2 at the distal tip 8 of turbine blade 2.

Preferably the fixing pin 38 is additionally structured to compensate possible axial misalignment between the pass-through hole on supporting bracket 36 and the axial end of rake structure 13.

More specifically, with particular reference to Figures 8 and 9, the fixing pin 38 preferably has a spherical-shaped head 38a which fits into a corresponding bushing 40 rigidly secured to the supporting bracket 36 preferably by welding, and which is preferably firmly locked/retained inside the same bushing 40 by means of a threaded hub 41b firmly screwed into the central pass-through hole of the bushing 40.

Preferably the fixing pin 38 additionally has a spherical-shaped medial segment 38b which is fitted/coupled in axially-sliding manner to a flanged bushing 41 that stably abuts in free sliding manner against a preferably substantially flat, bottom wall of an outwards-protruding cup-shaped portion 39a of the platelike lid 39 of turbine blade 2.

Preferably the spherical-shaped medial segment 38b of fixing pin 38 is furthermore coupled in substantially airtight manner to the flanged bushing 41 which, in turn, is preferably coupled in substantially airtight manner to the bottom wall of cup-shaped portion 39a, so as to prevent the cooling air from freely flowing outside of the longitudinal inner cavity 4 of turbine blade 2.

More specifically, in the example shown the flanged bushing 41 is preferably restricted between the bottom wall of the cup-shaped portion 39a of platelike lid 39 and a retaining washer 42 that surrounds the flanged bushing 41, overlaps the whole peripheral edge of the flanged bushing 41 and is finally rigidly connected to the bottom wall of cup-shaped portion 39a preferably by welding.

The flanged bushing 41 is therefore allowed to slide on its laying plane within the discoidal seat delimited by retaining washer 42 and the bottom wall of the cup-shaped portion 39a of platelike lid 39.

Flanged bushing 41, retaining washer 42 and the bottom wall of the cup-shaped portion 39a of platelike lid 39 therefore form the sealing system that prevents the cooling air from freely flowing outside of the longitudinal inner cavity 4 of turbine blade 2 at the distal tip 8 of turbine blade 2.

In addition to the above, with reference to Figures 3, 4 and 8, the supporting bracket 36 is preferably platelike and the fixing pin 38 preferably extends substantially perpendicular to the supporting bracket 36.

Preferably the supporting bracket 36 moreover has a flat sidewall which is firmly secured in abutment against the perimeter wall 37 of the plate-like end portion 10 of distal tip 8 preferably by means of two or more anchoring bolts 45, each of which engages in pass-through manner both the peripheral wall 37 and the supporting bracket 36 before reaching and screwing into a corresponding locking nut 46 located opposite to the peripheral wall 37 of plate-like end portion 10.

Preferably the flat sidewall of supporting bracket 36 is additionally secured to the perimeter wall 37 of plate-like end portion 10 via a centering pin 47 that protrudes in cantilever manner from the perimeter wall 37 and extends within the supporting bracket 36 while remaining coaxial to a reference axis which is preferably locally substantially perpendicular to the perimeter wall 37.

With reference to Figures 4 and 5, the pyrometer device 3 comprises, for each oblong ceramic cap 12, a respective optical fibre 50 which extends inside the oblong supporting body 11 and the inner cavity of the oblong ceramic cap 12 nearly up to the distal end of the same oblong ceramic cap 12, and is adapted to collect and channel the heat radiations emitted by the internal surface of the oblong ceramic cap 12 towards an electronic control unit (not shown in the figures) which is preferably located outside of the gas turbine engine 100. This electronic control unit is configured to convert the heat radiations channelled by each optical fibre 50 into a corresponding electric signal indicative of the actual temperature of the corresponding oblong ceramic cap 12.

At high temperatures, in fact, each oblong ceramic cap 12 behaves substantially like a black body and therefore emits heat radiations according to a specific emission spectrum that varies according to the actual temperature of the oblong ceramic cap 12.

The optical fibres 50 collect and channel the heat radiations emitted by the internal surface of the various oblong ceramic caps 12 towards the electronic control unit which, in turn, analyses the emission spectrum of the heat radiations to determine, in per-se known manner, the actual temperature of each oblong ceramic cap 12.

In the example shown, in particular, the rake structure 13 preferably includes, preferably at the axial end of the oblong supporting body 11 located close to the coupling root 7 of the turbine blade 2, a first optical connector 51 adapted to couple with a complementary second optical connector (not shown in the figures) of a fibre-optic prolong cable (not shown in the figures) which preferably ends at the electronic control unit capable of converting the heat radiations collected by each optical fibre 50 into a corresponding electric signal indicative of the actual temperature of the oblong ceramic cap 12.

Each optical fibre 50, in turn, is preferably made of sapphire or other heat-resistant light-conductive material, and preferably extends inside the oblong supporting body 11 and the inner cavity of the oblong ceramic cap 12, from the optical connector 51 nearly up to the distal end of the oblong ceramic cap 12.

General operation of gas turbine engine 100 is similar to that of any other gas turbine engine, thus no further explanation are required.

As regards the blade assembly 1, the oblong ceramic caps 12 spaced side-by-side to one another in turbine radial direction allows the pyrometer device 3 to determine, at same time, the temperature of the hot gasses in several reference points along the leading edge 6 of the turbine blade 2.

The advantages resulting from the particular structure of blade assembly 1 are large in number.

First of all, the particular design of rake-structure 13 and of coupling members 28 and 29 allows an easy assembly/dismantling procedure.

Moreover the particular design of rake-structure 13 and of coupling members 28 and 29 allows an effective compensation of the differences in thermal expansion of turbine blade 2 and rake-structure 13, thus preventing the fragile oblong ceramic caps 12 from being damaged due to excessive mechanical stresses.

Coupling member 28, in fact, allows a secure clamping of the rake structure 13 to the coupling root 7 of turbine blade 2 with the possibility to incline the rake structure 13 during assembly, with all advantages that this entails.

Coupling member 29, on the other hand, allows free movement of the rake structure 13 in turbine radial direction thus preventing it from blocking during thermal expansion.

In addition to the above deep integration of the oblong ceramic caps 12 in the leading edge 6 of turbine blade 2 significantly reduces the thermal stresses which the oblong ceramic caps 12 are subjected to.

Finally the annular airgap 18 formed around each oblong ceramic cap 12 allows an intensive cooling of the metal parts integrated into the leading edge 6 and exposed to the hot gasses.

Clearly, changes may be made to the blade assembly 1 and to the gas turbine engine 100 disclosed above without, however, departing from the scope of the present invention as defined by the claims.

For example, the gas turbine engine 100 may include two discrete combustor assemblies arranged inside the casing 101, one downstream the other, and a further expansion turbine interposed between the two discrete combustor assemblies.

## Claims

1. Blade assembly (1) for gas turbine engines including a turbine blade (2) and a pyrometer device (3) at least partly housed inside the turbine blade (2);
the blade assembly (1) being **characterized in that** the pyrometer device (3) comprises: an oblong supporting body (11) which is accommodated inside a longitudinal inner cavity (4) that extends inside the turbine blade (2) behind a leading edge (6) of the turbine blade (2); a plurality of transversal oblong ceramic caps (12) which jut out from said oblong supporting body (11) spaced side by side to one another so as to form a rake structure (13), and each of which engages in a pass-through manner a corresponding opening (14) formed in the turbine blade (2), at the leading edge (6) thereof, so that a segment of the oblong ceramic cap (12) protrudes outside of the turbine blade (2) in cantilever manner; and, for each oblong ceramic cap (12), a respective optical fibre (50) which extends inside the oblong supporting body (11) and the inner cavity of the oblong ceramic cap (12) nearly up to the distal end of the oblong ceramic cap (12), and is adapted to collect and channel the heat radiations emitted by the internal surface of the oblong ceramic cap (12) towards an electronic control unit.

2. Blade assembly according to Claim 1, **characterized in that** each oblong ceramic cap (12) is substantially nail-shaped.

3. Blade assembly according to Claim 1 or 2, **characterized in that** said rake structure (13) additionally comprises, for each oblong ceramic cap (12), a respective oblong tubular sleeve (16) which extends approximately coaxial to the oblong ceramic cap (12), from the oblong supporting body (11) up to the opening (14) on the leading edge (6) of the turbine blade (2), so as to surround the segment of the oblong ceramic cap (12) recessed inside the turbine blade (2).

4. Blade assembly according to Claim 3, **characterized in that** the oblong tubular sleeve (16) is dimensioned so as to form/delimit an annular airgap (18) all-around the oblong ceramic cap (12).

5. Blade assembly according to Claim 4, **characterized in that** one or more transversal through holes (19) are formed in the lateral wall of said oblong tubular sleeve (16), so as to allow free air circulation along the annular airgap (18) .

6. Blade assembly according to Claim 3, 4 or 5, **characterized in that** the oblong tubular sleeve (16) is discrete from the oblong supporting body (11) and abuts in free sliding manner onto the sidewall of the oblong supporting body (11), so that the whole tubular sleeve (16) is able to freely slide over the oblong supporting body (11) in a direction locally substantially perpendicular to the longitudinal axis of the oblong tubular sleeve (16).

7. Blade assembly according to Claim 6, **characterized in that** the rake structure (13) additionally includes fixing means (21) adapted to stably hold the oblong tubular sleeve (16) in abutment against the oblong supporting body (11).

8. Blade assembly according to any one of Claims 3 to 7, **characterized in that** the pyrometer device (3) additionally comprises, for each oblong tubular sleeve (16), a bushing (25) which is plugged/fitted into the opening (14) on the leading edge (6) of the turbine blade (2); and **in that** the oblong tubular sleeve (16) extends within the tubular bushing (25).

9. Blade assembly according to Claim 8, **characterized in that** the distal end of the oblong tubular sleeve (16) is telescopically fitted into said bushing (25).

10. Blade assembly according to any one of the preceding claims, **characterized by** additionally comprising a first coupling member (28) adapted to firmly connect a first axial end of the rake structure (13) to a coupling root (7) of the turbine blade (2), and a second coupling member (29) adapted to firmly connect a second axial end of the rake structure (13) to a distal tip (8) of the turbine blade (2) .

11. Blade assembly according to Claim 10, **characterized in that** the first coupling member (28) is adapted to firmly connect the rake structure (13) to the coupling root (7) while allowing the rake structure (13) to pivot with respect to the coupling root (7) about a reference axis (C) which is locally substantially perpendicular to a laying plane (P) of the rake structure (13) and/or substantially parallel to a longitudinal axis (A) of the turbine blade (2) .

12. Blade assembly according to Claim 10 or 11, **characterized in that** the second coupling member (29) is adapted to firmly connect the rake structure (13) to the distal tip (8) of the turbine blade (2) while allowing the rake structure (13) to freely move inside the longitudinal inner cavity (4) in a direction substantially parallel to the longitudinal axis (A) of the turbine blade (2).

13. Blade assembly according to any one of the preceding claims, **characterized in that** said electronic control unit is configured to convert the heat radiations channelled by each optical fibre (50) into a corresponding signal indicative of the actual temperature of the corresponding oblong ceramic cap (12).

14. Blade assembly according to Claim 13, **characterized in that** the rake structure (13) includes an first optical connector (51) which is located at an axial end of the oblong supporting body (11), and is adapted to couple with a complementary second optical connector of a fibre-optic prolong cable; each optical fibre (50) extending inside the rake structure (13) from said first optical connector (51) nearly up to the distal end of the corresponding oblong ceramic cap (12).

15. Gas turbine engine (100) comprising: a compressor (102) in which compression of the outside air occurs for producing a flow of compressed air, a combustor assembly (103) in which combustion of a mixture of fuel and compressed air arriving from said compressor (102) occurs for producing a flow of hot gasses, and an expansion turbine (103) in which expansion of the hot gasses arriving from combustor assembly (103) occurs; the expansion turbine (105) comprising a series of annular rows of turbine blades (108, 109) arranged one adjacent the other and each including a number of radially-extending and angularly-staggered turbine blades (110, 111);
the gas turbine engine (100) being **characterized in that** at least one of said annular rows of turbine blades (108, 109) includes at least one blade assembly (1) according to any one of Claims 1-14.

## Patentansprüche

1. Schaufelanordnung (1) für Gasturbinenmaschinen, die eine Turbinenschaufel (2) und eine wenigstens teilweise im Inneren der Turbinenschaufel (2) untergebrachte Pyrometervorrichtung (3) umfasst,
wobei die Schaufelanordnung (1) **dadurch gekennzeichnet ist, dass** die Pyrometervorrichtung (3) umfasst:
einen länglichen Stützkörper (11), der innerhalb eines länglichen inneren Hohlraums (4) untergebracht ist, der sich innerhalb der Turbinenschaufel (2) hinter einer Vorderkante (6) der Turbinenschaufel (2) erstreckt; mehrere transversal verlaufende längliche Keramikaufsätze (12), die aus dem länglichen Stützkörper (11) hervorstehen und nebeneinander beabstandet angeordnet sind, so dass sie eine Rechenstruktur (13) bilden, und von denen jeder mit einer entsprechenden Öffnung (14), die in der Turbinenschaufel (2) an deren Vorderkante (6) ausgebildet ist, in einer hindurchgehenden Weise in Eingriff ist, so dass ein Segment des länglichen Keramikaufsatzes (12) von der Turbinenschaufel (2) in einer freitragenden Weise nach außen hervorsteht; und eine entsprechende optische Faser (50) für jeden länglichen Keramikaufsatz (12), die sich innerhalb des länglichen Stützkörpers (11) und des inneren Hohlraums des länglichen Keramikaufsatzes (12) fast bis zum distalen Ende des länglichen Keramikaufsatzes (12) erstreckt und geeignet ist, die von der inneren Oberfläche des länglichen Keramikaufsatzes (12) emittierten Wärmestrahlungen aufzunehmen und zu einer elektronischen Steuereinheit weiterzuleiten.

2. Schaufelanordnung nach Anspruch 1, **dadurch gekennzeichnet, dass** jeder längliche Keramikaufsatz (12) im wesentlichen stiftförmig ist.

3. Schaufelanordnung nach Anspruch 1 oder 2, **dadurch gekennzeichnet, dass** die Rechenstruktur (13) zusätzlich für jeden länglichen Keramikaufsatz (12) eine entsprechende längliche rohrförmige Hülse (16) umfasst, die sich näherungsweise koaxial zu dem länglichen Keramikaufsatz (12) von dem länglichen Stützkörper (11) bis zu der Öffnung (14) an der Vorderkante (6) der Turbinenschaufel (2) erstreckt, so dass sie das Segment des länglichen Keramikaufsatzes (12) umgibt, das in das Innere der Turbinenschaufel (2) eingelassen ist.

4. Schaufelanordnung nach Anspruch 3, **dadurch gekennzeichnet, dass** die längliche rohrförmige Hülse (16) so dimensioniert ist, dass sie einen ringförmigen Luftspalt (18) um den länglichen Keramikaufsatz (12) herum bildet/begrenzt.

5. Schaufelanordnung nach Anspruch 4, **dadurch gekennzeichnet, dass** ein oder mehrere transversale Durchgangslöcher (19) in der Seitenwand der länglichen rohrförmigen Hülse (16) ausgebildet sind, um eine freie Luftzirkulation entlang des ringförmigen Luftspalts (18) zu ermöglichen.

6. Schaufelanordnung nach Anspruch 3, 4 oder 5, **dadurch gekennzeichnet, dass** die längliche rohrförmige Hülse (16) gegenüber dem länglichen Stützkörper (11) eigenständig ist und in frei gleitender Weise an der Seitenwand des länglichen Stützkörpers (11) anliegt, so dass die gesamte rohrförmige Hülse (16) frei über den länglichen Stützkörper (11) in einer Richtung lokal im Wesentlichen senkrecht zu der Längsachse der länglichen rohrförmigen Hülse (16) gleiten kann.

7. Schaufelanordnung nach Anspruch 6, **dadurch gekennzeichnet, dass** die Rechenstruktur (13) zusätzlich Befestigungsmittel (21) aufweist, die geeignet sind, die längliche rohrförmige Hülse (16) stabil an dem länglichen Stützkörper (11) anliegend zu halten.

8. Schaufelanordnung nach einem der Ansprüche 3 bis 7, **dadurch gekennzeichnet, dass** die Pyrometervorrichtung (3) zusätzlich für jede längliche rohrförmige Hülse (16) eine Buchse (25) aufweist, die in die Öffnung (14) an der Vorderkante (6) der Turbinenschaufel (2) eingesteckt/eingepasst ist; und dass sich die längliche rohrförmige Hülse (16) innerhalb der rohrförmigen Buchse (25) erstreckt.

9. Schaufelanordnung nach Anspruch 8, **dadurch gekennzeichnet, dass** das distale Ende der länglichen rohrförmigen Hülse (16) teleskopartig in die Buchse (25) eingesetzt ist.

10. Schaufelanordnung nach einem der vorangehenden Ansprüche, **dadurch gekennzeichnet, dass** sie zusätzlich ein erstes Kopplungselement (28), das geeignet ist, ein erstes axiales Ende der Rechenstruktur (13) mit einem Kopplungsfuß (7) der Turbinenschaufel (2) fest zu verbinden, und ein zweites Kopplungselement (28), das geeignet ist, ein zweites axiales Ende der Rechenstruktur (13) mit einer distalen Spitze (8) der Turbinenschaufel (2) fest zu verbinden, umfasst.

11. Schaufelanordnung nach Anspruch 10, **dadurch gekennzeichnet, dass** das erste Kopplungselement (28) geeignet ist, die Rechenstruktur (13) mit dem Kopplungsfuß (7) fest zu verbinden, während es der Rechenstruktur (13) ermöglicht, bezüglich des Kopplungsfußes (7) um eine Referenzachse (C) zu schwenken, die lokal im Wesentlichen senkrecht zu einer Lageebene (P) der Rechenstruktur (13) und/oder im Wesentlichen parallel zu einer Längsachse (A) der Turbinenschaufel (2) ist.

12. Schaufelanordnung nach Anspruch 10 oder 11, **dadurch gekennzeichnet, dass** das zweite Kopplungselement (29) geeignet ist, die Rechenstruktur (13) mit der distalen Spitze (8) der Turbinenschaufel (2) fest zu verbinden, während es der Rechenstruktur (13) ermöglicht, sich innerhalb des länglichen inneren Hohlraums (4) in einer Richtung im Wesentlichen parallel zu der Längsachse (A) der Turbinenschaufel (2) frei zu bewegen.

13. Schaufelanordnung nach einem der vorangehenden Ansprüche, **dadurch gekennzeichnet, dass** die elektronische Steuereinheit dafür konfiguriert ist, die von der jeweiligen optischen Faser (50) weitergeleiteten Wärmestrahlungen in ein entsprechendes Signal umzuwandeln, das die Ist-Temperatur des entsprechenden länglichen Keramikaufsatzes (12) anzeigt.

14. Schaufelanordnung nach Anspruch 13, **dadurch gekennzeichnet, dass** die Rechenstruktur (13) einen ersten optischen Verbinder (51) aufweist, der an einem axialen Ende des länglichen Stützkörpers (11) angeordnet ist und geeignet ist, mit einem komplementären zweiten optischen Verbinder eines faseroptischen Verlängerungskabels gekoppelt zu werden; wobei sich jede optische Faser (50) innerhalb der Rechenstruktur (13) von dem ersten optischen Verbinder (51) fast bis zu dem distalen Ende des entsprechenden länglichen Keramikaufsatzes (12) erstreckt.

15. Gasturbinenmaschine (100), umfassend: einen Verdichter (102), in dem eine Verdichtung der Außenluft zum Erzeugen eines Stroms verdichteter Lust erfolgt, eine Brennkammeranordnung (103), in der eine Verbrennung eines Gemischs aus Brennstoff und verdichteter Luft, die von dem Verdichter (102) ankommt, zum Erzeugen eines Stroms heißer Gase erfolgt, und eine Expansionsturbine (103), in der eine Expansion der von der Brennkammeranordnung (103) kommenden heißen Gase erfolgt; wobei die Expansionsturbine (105) eine Folge von ringförmigen Reihen von Turbinenschaufeln (108, 109) aufweist, die nebeneinander angeordnet sind und jeweils eine Anzahl von sich radial erstreckenden und winkelmäßig versetzten Turbinenschaufeln (110, 111) aufweisen; wobei die Gasturbinenmaschine (100) **dadurch gekennzeichnet ist, dass** wenigstens eine der ringförmigen Reihen von Turbinenschaufeln (108, 109) wenigstens eine Schaufelanordnung (1) nach einem der Ansprüche 1 bis 14 aufweist.

## Revendications

1. Agencement d'aube (1) pour moteurs de turbine à gaz comprenant une aube de turbine (2) et un dispositif de pyromètre (3) au moins partiellement logé dans l'aube de turbine (2) ;
l'agencement d'aube (1) étant **caractérisé en ce que** le dispositif de pyromètre (3) comprend : un corps de support oblong (11) qui est logé à l'intérieur d'une cavité interne longitudinale (4) qui s'étend à l'intérieur de l'aube de turbine (2) derrière un bord d'attaque (6) de l'aube de turbine (2) ; une pluralité de capuchons en céramique oblongs transversaux (12) qui font saillie dudit corps de support oblong (11) espacés côte à côte les uns des autres afin de former une structure de râteau (13), et dont chacun met en prise, de manière débouchante, une ouverture (14) correspondante formée dans l'aube de turbine (2), au niveau de son bord d'attaque (6), de sorte qu'un segment du capuchon en céramique oblong (12) fait saillie vers l'extérieur de l'aube de turbine (2) en porte-à-faux ; et pour chaque capuchon en céramique oblong (12), une fibre optique (50) respective qui s'étend à l'intérieur du corps de support oblong (11) et de la cavité interne du capuchon en céramique oblong (12) presque jusqu'à l'extrémité distale du capuchon en céramique oblong (12), et est adaptée pour collecter et canaliser les rayonnements de chaleur émis par la surface interne du capuchon en céramique oblong (12) vers une unité de commande électronique.

2. Agencement d'aube selon la revendication 1, **caractérisé en ce que** chaque capuchon en céramique oblong (12) est sensiblement en forme de clou.

3. Agencement d'aube selon la revendication 1 ou 2, **caractérisé en ce que** ladite structure de râteau (13) comprend de plus, pour chaque capuchon en céramique oblong (12), un manchon tubulaire oblong (16) respectif qui s'étend de manière approximativement coaxiale jusqu'au capuchon en céramique oblong (12), à partir du corps de support oblong (11) jusqu'à l'ouverture (14) sur le bord d'attaque (6) de l'aube de turbine (2), afin d'entourer le segment du capuchon en céramique oblong (12) enfoncé à l'intérieur de l'aube de turbine (2).

4. Agencement d'aube selon la revendication 3, **caractérisé en ce que** le manchon tubulaire oblong (16) est dimensionné afin de former / délimiter un entrefer annulaire (18) tout autour du capuchon en céramique oblong (12).

5. Agencement d'aube selon la revendication 4, **caractérisé en ce qu'**un ou plusieurs trous débouchants transversaux (19) sont formés dans la paroi latérale dudit manchon tubulaire oblong (16), afin de permettre la circulation d'air libre le long de l'entrefer annulaire (18).

6. Agencement d'aube selon la revendication 3, 4 ou 5, **caractérisé en ce que** le manchon tubulaire oblong (16) est distinct du corps de support tubulaire (11) et vient en butée d'une manière librement coulissante sur la paroi latérale du corps de support oblong (11), de sorte que tout le manchon tubulaire (16) peut coulisser librement sur le corps de support oblong (11) dans une direction localement sensiblement perpendiculaire à l'axe longitudinal du manchon tubulaire oblong (16).

7. Agencement d'aube selon la revendication 6, **caractérisé en ce que** la structure de râteau (13) comprend en outre un moyen de fixation (21) adapté pour maintenir de manière stable le manchon tubulaire oblong (16) en butée contre le corps de support oblong (11).

8. Agencement d'aube selon l'une quelconque des revendications 3 à 7, **caractérisé en ce que** le dispositif de pyromètre (3) comprend en outre, pour chaque manchon tubulaire oblong (16), une douille (25) qui est enfichée / montée dans l'ouverture (14) sur le bord d'attaque (6) de l'aube de turbine (2) ; et **en ce que** le manchon tubulaire oblong (16) s'étend dans la douille tubulaire (25).

9. Agencement d'aube selon la revendication 8, **caractérisé en ce que** l'extrémité distale du manchon tubulaire oblong (16) est montée par voie télescopique dans ladite douille (25).

10. Agencement d'aube selon l'une quelconque des revendications précédentes, **caractérisé en ce qu'**il comprend en outre un premier élément de couplage (28) adapté pour raccorder fermement une première extrémité axiale de la structure de râteau (13) à une emplanture de couplage (7) de l'aube de turbine (2), et un second élément de couplage (29) adapté pour raccorder fermement une seconde extrémité axiale de la structure de râteau (13) à une pointe distale (8) de l'aube de turbine (2).

11. Agencement d'aube selon la revendication 10, **caractérisé en ce que** le premier élément de couplage (28) est adapté pour raccorder fermement la structure de râteau (13) à l'emplanture de couplage (7) tout en permettant à la structure de râteau (13) de pivoter par rapport à l'emplanture de couplage (7) autour d'un axe de référence (C) qui est localement sensiblement perpendiculaire à un plan de pose (P) de la structure de râteau (13) et/ou sensiblement parallèle à un axe longitudinal (A) de l'aube de turbine (2).

12. Agencement d'aube selon la revendication 10 ou 11, **caractérisé en ce que** le second élément de couplage (29) est adapté pour raccorder fermement la structure de râteau (13) à la pointe distale (8) de l'aube de turbine (2) tout en permettant à la structure de râteau (13) de se déplacer librement à l'intérieur de la cavité interne longitudinale (4) dans une direction sensiblement parallèle à l'axe longitudinal (A) de l'aube de turbine (2).

13. Agencement d'aube selon l'une quelconque des revendications précédentes, **caractérisé en ce que** ladite unité de commande électronique est configurée pour convertir les rayonnements de chaleur canalisés par chaque fibre optique (50) en un signal correspondant indicatif de la véritable température du capuchon en céramique oblong (12) correspondant.

14. Agencement d'aube selon la revendication 13, **caractérisé en ce que** la structure de râteau (13) comprend un premier connecteur optique (51) qui est positionné au niveau d'une extrémité axiale du corps de support oblong (11) et est adapté pour se coupler avec un second connecteur optique complémentaire d'un câble de rallonge de fibre optique ; chaque fibre optique (50) s'étendant à l'intérieur de la structure de râteau (13) à partir dudit premier connecteur optique (51) presque jusqu'à l'extrémité distale du capuchon en céramique oblong (12) correspondant.

15. Moteur de turbine à gaz (100) comprenant : un compresseur (102) dans lequel la compression de l'air extérieur a lieu pour produire un écoulement d'air comprimé, un ensemble de chambre de combustion (103) dans lequel la combustion d'un mélange de carburant et d'air comprimé arrivant audit compresseur (102) a lieu pour produire un écoulement de gaz chauds, et une turbine d'expansion (103) dans laquelle l'expansion des gaz chauds arrivant de l'ensemble de chambre de combustion (103) a lieu ; la turbine d'expansion (105) comprenant une série de rangées annulaires d'aubes de turbine (108, 109) agencées de manière adjacente entre elles et comprenant chacune un certain nombre d'aubes de turbine (110, 11) s'étendant radialement et angulairement en quinconce ;
le moteur de turbine à gaz (100) étant **caractérisé en ce qu'**au moins l'une desdites rangées annulaires des aubes de turbine (108, 109) comprend au moins un agencement d'aube (1) selon l'une quelconque des revendications 1 à 14.
